# EUROPEAN PATENT APPLICATION

(11) **EP 2 884 698 A1**
(43) Date of publication of application: **17.06.2015**
(21) Application number: 13197526.0
(22) Date of filing: 16.12.2013
(51) Int. Cl.: H04L 12/28, H04L 29/12, H04W 48/18

(54) **Method for interaction of a device appliance and a communication unit**

(71) Applicant: Gemalto M2M GmbH, 81541 München (DE)
(72) Inventor: Günther, Frank, 13581 Berlin (DE)
(74) Representative: Grevin, Emmanuel

(57) **Abstract**

The present invention relates to a method of for interaction between a device appliance and a communication unit, by means of a dedicated packet based connection, which allows transport of data packets from the device appliance to the communication unit. The communication unit is configured to filter from the incoming data packets those that are dedicated for internal endpoints of the communication unit and convert and forward those data packets to the internal endpoints.

## Description

### FIELD OF THE INVENTION

The present invention relates to a method of interaction between a device appliance and a communication unit, the communication unit being configured to be operated within a wireless cellular communication network, comprising a multitude of external endpoints reachable through the wireless cellular communication network. In the invention the communication unit further comprises at least one internal endpoint, the communication unit being coupled to the device appliance by connection means providing one or more access channels allowing interaction between the device appliance and the communication unit. By means of said access channels the device appliance can communicate with the at least one internal endpoint of the communication unit.

The invention also pertains to a device using said method.

### BACKGROUND OF THE INVENTION

Generally, the interface between a device appliance and a communication unit comprises a limited set of channels for interaction in order to fulfill a specific set of functions, e.g. control, diagnosis and of course perform communication with devices remotely connected via the wireless cellular communication network.
Such interfaces are e.g. USB, SPI, serial interfaces and others. Content of the interaction are in particular AT command interface, data connections, access to SIM cards, or read out of GPS data on an internal GPS receiver contained within the communication unit.
Drawback of this architecture is that the number of available channels is limited. Furthermore each function is accessible via exactly one proprietary channel, which means this channel is only used for accessing this one or a limited amount of functions. From the device appliance perspective it is desired to access an unlimited amount of functions..
Additionally the interface between device appliances and a communication unit is by now not secured with respect to physical access to the wired lines between device appliance and communication unit.

### SUMMARY OF THE INVENTION

The present invention aims to avoid the drawbacks of the prior art by a method for interaction between a device appliance and a communication unit according to claim 1,
It is further solved by a communication unit to implement the method of the invention according to claim 8 to 14. It is further solved by a device appliance according to claim 15.

The inventive method comprises the steps of for the device appliance:
- requesting from said connection means to setting up a dedicated packet based connection using one single access channel,
- marking a data packet with destination information,
and the steps of, for said connection means, setting up the dedicated packet based connection using one single access channel and, for the communication unit:
- retrieving said data packet by way of the set up dedicated packet based connection,
- filtering said data packet according to the destination information the data packet is marked with,
whereby said filtering step comprises the sub-steps of:
- looking up the destination information in an address resolution table stored in the communication unit and
- indicating that the data packet is dedicated for an internal endpoint if the destination information match with an address in the address resolution table
- if the looking up indicates that the data packet is dedicated for the at least one internal endpoint,
- converting the data packet in a message according to the at least one internal endpoint's message format,
- forwarding the message to the at least one internal endpoint, or
- if the looking up does not indicate that the data packet is dedicated for the at least one internal endpoint,
- forwarding the data packet to one of the multitude of external endpoints depicted by the destination information.

According to this method, the communication unit which can be embodied by a machine-to-machine-module is connected via existing interfaces to a device appliance. More particularly the invention concerns cases where the communication unit is a distinct hardware element, coupled with the device appliance. The invention enables to use one existing access channel for addressing several internal endpoints while before each proprietary channel was addressing a single internal endpoint. The use of destination information introduced by the device appliance in any data packet enables to reach the goal of the invention in combination with conversion means.

For building up a connection the device appliance uses its connection means to setting up a dedicated packet based connection using one single access channel. Such dedicated packet based connection is preferably an IP connection, and consequently the connection means provides an IP stack, which is a software unit capable of decoding and coding the IP protocol. It is known that machine-to-machine-modules already provide besides other channels access channels capable of providing an IP connection. Such access channels are used for setting up an IP connection via a wireless air interface of the wireless cellular communication network to a remote server. Preferably such available access channels and connections are used for the inventive method. By means of the set up of the IP connection, the device appliance is configured to mark data packets with destination information and thus to provide said data packet which comprises said destination information. Usually also originator information are added to a data packet as well by the destination appliance.

When the device appliance provides by way of its connection means such data packet, according to the inventive method, the communication unit retrieves said data packet and executes a filtering process.
Such filtering process can be preferably executed either in the firmware of the communication unit or a Java applet embedded within the communication unit.
The filtering of the data packet has the goal to figure out, if the retrieved data packet is one that is envisaged to be forwarded via wireless link to an external endpoint like a remote server or envisaged to be used internally at one internal endpoint of the communication unit. Such internal endpoints can be any component of the communication unit, including the baseband chips resp. protocol stack, a GPS unit, a SIM/USIM card, a Java Virtual Machine or even some type of memory.

The filtering of the data packets is working bi-directional. That means also when a data packet is originated from an internal endpoint it passes the filtering unit and is either sent to an external endpoint or back to the device appliance. In one way this is done if a communication context, in particular a socket, is set up between the device appliance and the communication unit. Advantageously data packets are retrieved with originator information by the communication unit. Therefore responses can be addressed by a destination information derived from such an originator information.
Further the address of the device appliance can be stored accessible for the filtering unit, in particular with the address resolution table, and so also initiative communication from an internal endpoint can be sent.
One preferred solution is to set up a registering service for an internal endpoint which regularly provides information packets, like a sensor or the like.
The device appliance or a component thereof can register itself at the registering service for the internal endpoint. This means, the address of the component or the device appliance is stored within a register storage within the communication unit. This register storage is accessible for the filtering unit. Thus in case a data packet is originated at said internal endpoint, the filtering unit can look up in the register storage, which components of the device appliance have registered for information from this internal endpoint. The filtering unit then forwards the data packet to the registered components.

The filtering comprises the step of looking up the destination information of the data packet in an address resolution table stored in the communication unit. Such address resolution table is typically a directory of available internal endpoints referred by rules indicating if given destination address is assigned to the respective internal endpoint. This can be done by address representations. Those address representations can be complete addresses or parts thereof, further bitmasks of the addresses, and other codings that represent one or more addresses assigned to internal endpoints. It is here also noted that the address resolution table can take other equivalent forms enabling to reach the same purpose which is to give rules of assignment for any destination address.
Therefore the decision if the data packet is dedicated for an internal endpoint is made by a comparison of destination information and addresses listed in the address resolution table..

If it is detected that the destination information matches with one of the addresses listed in the address resolution table, the data packet is indicated as dedicated for an internal endpoint. If not, it is indicated that the data packet is dedicated for an external endpoint and is forwarded according to the known method to the external endpoint by use of the wireless cellular communication network.

If the data packet is indicated as dedicated for an internal endpoint it needs to be converted to a message according to the internal endpoint's message format. This is advantageous as the internal endpoint is not necessarily capable of handling the data packet. With a conversion in conjunction with the filtering process, the internal endpoint does not need to care about the access channel used to provide the message to the communication unit.
It is furthermore advantageous if the communication unit is additionally configured to setup proprietary channels like known in the prior art in parallel to the inventive method.
In this sense the device appliance can choose which channel - the proprietary or the access channel according to the invention - is to use for addressing a message to an internal endpoint in the communication unit. This further helps for migration purposes of device appliances that were originally configured to handle communication units according the prior art by using proprietary channels, and are now getting prepared for a communication unit where the inventive method is implemented and which therefore allows to access internal endpoints via one access channel according to the invention.
By way of the proprietary channels, the dedicated packet based connection as such can further be activated or deactivated from the device appliance. Finally when the data packet is converted to a message according to the internal endpoints message format, the message is forwarded to the internal endpoint and can there be handled.

The advantage of the inventive method is that the device appliance can irrespective of hardware limitations be configured to access a freely definable amount of internal endpoints of the communication unit. Further the known solutions with proprietary channels at least for some internal endpoints can also be used in parallel. Additionally most device appliances are already equipped to handle a dedicated packet based connection, in particular when they are able to set up IP connections with remote devices, e.g. a website, web-based application, or FTP server etc., therefore for implementing the inventive method, a plurality of already present methods and units can be used.

In an advantageous embodiment the step of converting the data packet into a message according to the internal endpoints message format is improved. The problem to be solved is, that each message that is received at the communication unit via the access channel comprises a format needed for the dedicated packet based connection. In particular each message is contained in a data packet, accompanied at least by data packet frame information, which provide further information for the data packet based connection, at least the destination address and preferably the originator address.
With this embodiment the addressed problem is solved. The communication unit is further configured to cope with the fact that the available internal endpoints may be configured to understand different message formats. It is therefore necessary for the conversion process to know in which format the data packet is to be converted. This is in particular true when the message is not only wrapped by the data packet frame information and needs just to be unwrapped and forwarded to the internal endpoint, but when a real conversion needs to be done.
According to this embodiment the method further includes the step of - prior to the step of converting - looking up an information element indicating a type of internal endpoint. The information element is stored in relationship to the address resolution table in relation to the stored destination information related to the internal endpoint. The selection of the conversion method is based on a message format deducted from said information element.
This solution has the advantage that no additional source needs to be involved for figuring out the correct conversion method, as the address resolution table is accessed anyhow. If the conversion method information are stored directly together with the address resolution data or in a separate table linked to the address resolution table is arbitrary and both part of the invention.

Alternatively the problem can be solved with an embodiment wherein, prior to the step of converting, the method further includes the step of requesting information related to conversion method from the internal endpoint.
With that solution the address resolution table can be simplified and the internal endpoints know best the preferred message format.
Combinations of both solutions are of course part of the invention, depending on the internal endpoints capabilities.
It is further part of the invention that only for a subset of internal endpoints a conversion beyond unwrapping the data packet needs to be done. Additionally internal endpoints might even be capable of understanding data packets and care for the handling by themselves. In this case, the conversion is somehow a transparent step.

According to a further embodiment the method further includes, after the step of filtering, the step of examining at least one data packet. The examination has the goal to retrieve authentication information provided with the data packet, and in response to an examination step which shows the availability of authentication information allowing access to the addressed internal endpoint only in case of compliance of the retrieved authentication information of the data packet with the internal endpoints access policy.
With that it is possible to set up account based access rights preferably handled by each internal endpoint. For that the internal endpoint itself or the communication unit as such comprises account specific access information, which can include account name and password, certificates, authorization data, which define what kind of access rights within the respective internal endpoint are assigned. Such access rights can in particular being handled as profiles, that means that a couple of profiles are defined, e.g. comprising of: read-only, full-write access, or visitor, reader, administrator etc.
This embodiment allows new ways of access management on communication unit level, which increase security of the device as such.

In a further advantageous embodiment, security can further be increased by the further proposed method being such that it includes the step of exchanging in conjunction with the step of setting up dedicated packed based connection security related items between communication unit and device appliance, and the step of establishing a secured packet based communication by means of the exchanged security related items.

Said security related items are in particular certificates or keys, which allow for setting up an encrypted communication such that each data packet is after this exchange procedure, which represents an initialization of the communication, encrypted according to the received security related items and can be decrypted by the receiving party. To sum up, by this embodiment it is possible to secure the communication link between communication unit and device appliance, which was not possible by now with currently used dedicated channels.

According to another embodiment the method further includes the steps, for the communication unit, to provide on request from the device appliance an internal endpoint directory comprising information about accessible internal endpoints accompanied by the related destination information.
Such internal endpoint directory is exchanged in particular during initialization of the communication unit by the device appliance. By that, the device appliance gets an overview about the amount of internal endpoints and the respective destination information, which could be internal IP addresses. This allows the device appliance to self-configure the access to the communication unit. It can further receive a profile of the capabilities of the communication unit, e.g. if a GPS module is available etc. This internal endpoint directory preferably also includes information regarding the support of secure communication like mentioned above.

It is further advantageous that said internal endpoint directory can be requested from the communication unit by means of a channel different from the access channel for dedicated packet based connection.
This allows retrieving the requested internal endpoint directory before accessing the communication unit by means of the dedicated packet based connection. Otherwise it would require that the device appliance already has knowledge which destination information is assigned to the internal endpoint of the communication unit which is capable of providing the internal endpoint directory.

In a further advantageous embodiment it is further proposed a method being such that it comprises
- within the communication unit, the step of retrieving data packets from remote communication devices operating in the wireless cellular communication network,
- and the step of forwarding data packets to at least one of the internal endpoints based on destination information comprising a subaddressing item of the communication unit address within the wireless cellular communication network.
This embodiment is to make use of the filtering unit for inbound communication retrieved via the wireless cellular communication network. It allows - of course preferably guarded by known security means - to access at least one internal endpoint of the communication unit over the wireless link. That allows remote control or monitoring of the communication unit, which is advantageous for debugging purposes. As preferably IP based communication is used for such wireless link, the problem occurs that the communication unit is as such addressed by an IP address. Due to that this embodiment allows, by a subaddressing item, in particular a port number, to address the requested internal endpoint of the communication unit.

It is further according to a second aspect of the invention proposed a communication unit for operating within a wireless cellular communication network,
the communication unit is configured to be coupled to a device appliance, and is further comprising at least one internal endpoint,
the wireless cellular communication network comprising a plurality of external endpoints,
characterized in that the communication unit comprises
a filtering unit and an address resolution table and has access to at least one conversion unit,
the filtering unit is configured to
- receive from the device appliance by way of a dedicated packet based connection a data packet marked with destination information,
- look up said destination information in the address resolution table,
- indicate that the data packet is dedicated for a single internal endpoint if the destination information match with an address in the address resolution table, if it is indicated that the data packet is dedicated for a single internal endpoint, a single conversion unit is configured to
- convert the data packet in a message according to the internal endpoint's message format,
- forward the message to the dedicated internal endpoint,
   if it is indicated that the data packet is not dedicated for the at least one internal endpoint, the filtering unit is configured to
- forward the data packet to one of the multitude of external endpoints depicted by the destination information

It is further suggested according to a third aspect of the invention a device appliance coupled with the communication unit, by means of connection means providing one or more access channels allowing interaction between the device appliance and the communication unit,
characterized in that the device appliance comprises packet based connection means, said device appliance being further configured to
- request from said connection means to set up a dedicated packet based connection using one single access channel,
- mark a data packet with destination information,
- submit the data packet by way of the dedicated packet based connection to the communication unit,
wherein the destination information depicts either an internal endpoint of the communication unit or an external endpoint.

It is therefore a goal of this aspect of the invention that the device appliance is capable of addressing data packets to internal endpoints from the communication device by marking the data packet with the respective destination information.
It is in particular advantageous if the communication unit provides on request a response comprising information about accessible internal endpoints. It is therefore advantageous to request those information about accessible internal endpoints at an initialization phase of the device appliance in conjunction with the communication unit.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 represents a schematic of a device according to the prior art
- Figure 2 represents a schematic of a device implementing inventive method
- Figure 3a and 3b represents said schematic of a device with different communication flows

### DETAILED DESCRIPTION OF EMBODIMENTS OF THE INVENTION

The same elements have been designated with the same reference numerals in the different drawings, with respect to the prior art elements which correspond to elements in the diagram showing the inventive method are designated with same numbering in the postfix. For clarity, only those elements and steps which are useful to the understanding of the present invention have been shown in the drawings and will be described. Moreover, when an action is said to be performed by a device, it is in fact executed by a microprocessor in this device controlled by instruction codes recorded in a program memory on the said device.

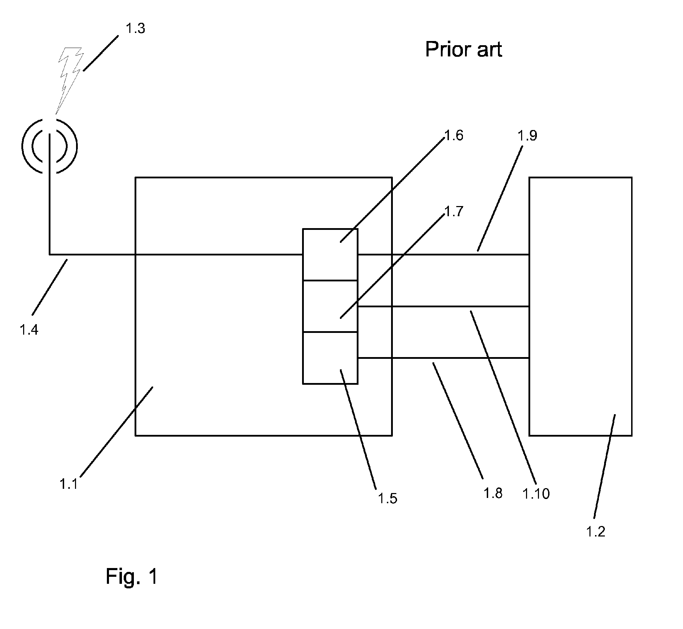

FIG. 1 schematically shows a communication unit 1.1 and a device appliance 1.2 coupled for communication purposes according to the prior art.
The communication unit comprises an antenna 1.4 which provides a wireless link 1.3 to the wireless cellular communication network (not shown), the communication unit is operating in. The communication unit is configured to perform under control of the device appliance communication tasks, in particular wireless communication tasks with remote devices operating in the same wide area communication network, in particular wireless network, like wireless cellular communication networks. The coupling is typically hardware based, which can be done by soldering or connectors. Alternatively also a wireless communication in the near field, in particular by way of a bluetooth or NFC connection, is foreseen. It is clear for someone skilled in the art that for communicating with the wireless cellular communication network the communication unit is preferably equipped with further elements, like a RF unit, a baseband chip with protocol stack, a SIM card, etc., which are not displayed here.
The communication unit 1.1 comprises three internal endpoints 1.5, 1.6, 1.7. Those internal endpoints can be an AT command interpreter, one of a plurality of control units, an external interface like RS232, SPI, CAN, or subdevices like a GPS unit, NFC etc. Such control units are such that internal functionality of the communication device can be determined by the requesting party. This can provide information about the status of the communication link, of available memory, temperatures or simply if the device is in connected mode. Such control units are accessible from the device appliance by distinct channels 1.8, 1.9, 1.10. Such channels can be embodied by an USB interface, a serial interface like RS232 or the like, but also wireless short range channels like Bluetooth, NFC or IrDA are thinkable and known from the state of the art. The channel as such does not predetermine which kind of data are to be exchanged but are dedicated to the communication of data of a given kind.
This device appliance is a device enhanced by wireless communication capabilities, like a washing machine, an ATM, a power meter, a car entertainment unit or something else.

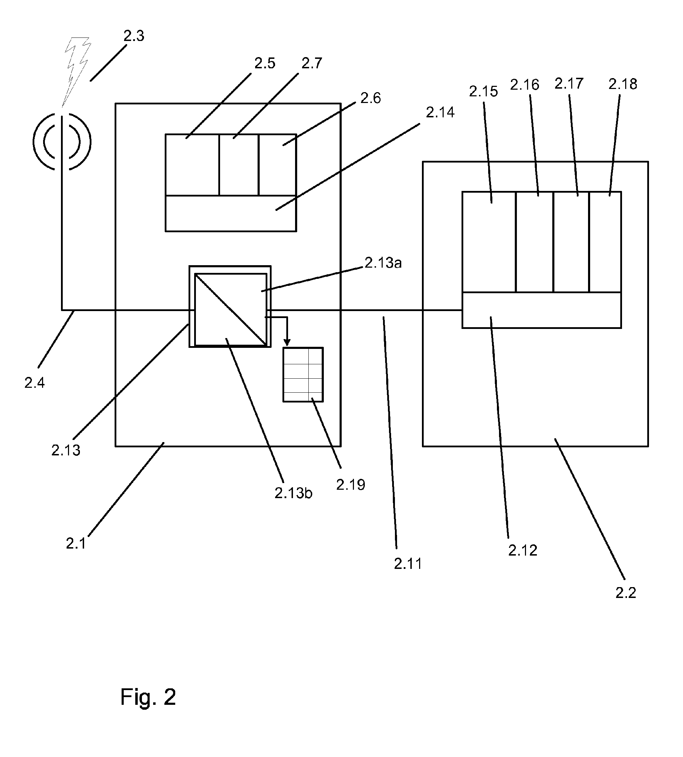

FIG. 2 schematically shows a communication unit 2.1 and a device appliance 2.2 coupled for communication purposes by way of connection means 2.11 capable of setting up a dedicated packet based channel, according to a preferred embodiment of the present invention. The communication unit 2.1 is corresponding to Fig. 1 equipped with an antenna 2.4 which connects to wireless link 2.3. The communication unit 2.1 is further equipped with a couple of internal endpoints 2.5, 2.6, 2.7. Such are corresponding to the internal endpoints 1.5, 1.6, 1.7, it is irrespective of the invention which kind of internal endpoints are actually available.
Further the communication unit 2.1 provides a filtering unit 2.13. The filtering unit is configured to receive data packets from the device appliance 2.2 via the connection means 2.11. In the present embodiment, this connection means 2.11 are realized as an IP connection, which means that the communication unit can retrieve data packets, in particular IP packets from device appliance 2.2. Generally such connection means can be implemented by multiple bearers like a serial connection, USB, SPI, I2C, CAN, which are capable of supporting IP based communication as a protocol.

The filtering unit comprises in present embodiment two elements that are displayed, which are an IP hub for internal communication 2.13a and an IP hub for external communication 2.13b. Any other internal architecture of the filtering unit could also solve the assigned task of the filtering unit and is encompassed by present invention. After the filtering step, which is described below, the filtering unit forwards depending on the outcome of the filtering step the retrieved IP packet either to said internal endpoints 2.5, 2.6, 2.7 or to the external network by means of wireless link 2.3.
Further this embodiment provides a first IP servicing unit 2.14. This is a unit capable to accept IP packets dedicated for said internal endpoints 2.5, 2.6, 2.7. It mainly fulfils the task of accepting, unpacking and distributing IP packets as well as the opposite way, which means accepting, packing and sending of messages from the internal endpoints.
The first IP servicing unit 2.14 is preferably connected to the filtering unit 2.13 or can be part of the filtering unit, which is another advantageous architecture. The first IP servicing unit 2.14 serves as distribution and address resolution unit. It therefore comprises or has access to an address resolution table 2.19 including all internal endpoints 2.5, 2.6, 2.7 and its assigned destination addresses. The first IP servicing unit 2.14 is in this exemplary embodiment further configured to execute conversion of the IP packets to a message format of each internal endpoint, therefore the IP servicing unit 2.14 further serves as conversion unit. Here it is chosen the suggested variant that the internal endpoints 2.5, 2.6, 2.7 know their respective conversion method. If the first IP servicing unit 2.14 is situated as part of the filtering unit, it is more advantageous if the conversion method is defined with relation to the address resolution table 2.19.

In this embodiment the device appliance 2.2 provides a more detailed architecture in order to cope with inventive communication units. At first the device appliance comprises a second IP servicing unit 2.12, which is at least capable of setting up dedicated packet based communication by means of communication means 2.11. It preferably comprises an IP stack, which is a software unit capable of decoding and coding the IP protocol. Those dedicated packet based communication channel is in particular an IP based communication. The second IP servicing unit 2.12 receives from the different components 2.15, 2.16, 2.17, 2.18 within the device appliance the task to send a message to a corresponding internal endpoint 2.5, 2.6, 2.7 in the communication unit or to an external endpoint via wireless cellular communication network. Generally each component could address each internal endpoint 2.5, 2.6, 2.7 within communication unit by means of the second IP servicing unit 2.12 and the subsequent elements. It is more advantageous if one of the components 2.15, 2.16, 2.17, 2.18 is only addressing a subset of the available internal endpoints 2.5, 2.6, 2.7. In some cases, like for a GPS sensor as internal endpoint 2.7 it is even recommended to have only one assigned component in the device appliance which addresses requests to the GPS sensor.
For those device appliances which are dedicated for areas with high security requirements it is an important feature that not only the wireless communication to the remote devices is secured but also the communication between the device appliance 2.2 and the communication unit 2.1. For that security related items can be exchanged between both units using the communication means 2.11 or any other proprietary channel. Those security related items are preferably keys or certificate and allow encryption of the communication. For the case of an IP based communication, here such encryption means is already available by means of Transport Layer Security (TLS), formerly known as Secure Socket Layer (SSL). First IP servicing unit 2.14 and second IP servicing unit 2.12 are therefore preferably already equipped with the required capabilities to allow such type of secured communication between device appliance 2.2 and communication unit 2.1 in both directions.

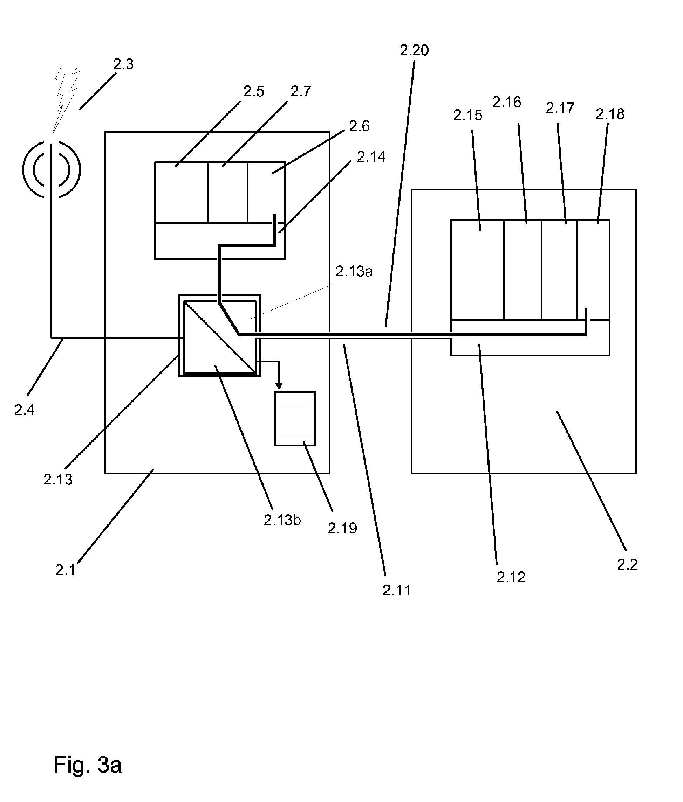

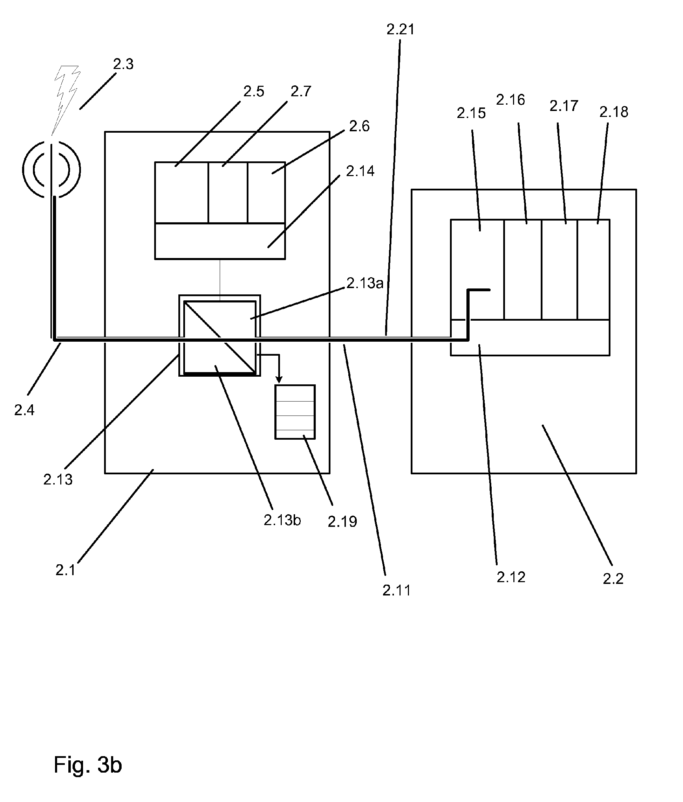

The task of the filtering unit is described within FIG. 3a und 3b.
FIG. 3a depicts the data flow in such a case. After the component 2.18 addresses its request to the second IP servicing unit 2.12 of the device appliance 2.2, the second IP servicing unit 2.12 then wraps the request of the respective component into an IP packet wrapper and equips the IP packet with the destination address of the envisaged internal endpoint, in this case 2.6. IP packets comprise as destination address an IP address, which is in IPv4 composed of four hierarchical address components as octets like 127.0.0.1 and optionally a port number as sub-address, like 127.0.0.1:144.
Then the second IP servicing unit 2.12 sends the prepared IP packet by means of connection means 2.11 to the communication module 2.1, where the IP packet - irrespective of possible intermediate components - reaches the filtering unit 2.13. There the destination address of the received IP packet is examined and thanks to a lookup in the address resolution table 2.19 detected if the destination address is addressing an internal endpoint 2.5, 2.6, 2.7 or an external endpoint.
In this case it is detected that the IP packet addresses an internal endpoint 2.5, 2.6, 2.7. This can in particular be detected by the destination address as such or by a part of the destination address. As IP addresses are in the case of IPv4 composed of four octets it is possible to dedicate less than four octets for identifying that it is addressing an internal endpoint 2.5, 2.6, 2.7. Hence not the full address has to match, as can be seen for an example, the address resolution table can further include wildcard addresses, like 127.0.*.*. In those cases a data packet with an IP address as destination information like 127.0.0.2 would match above address in the address resolution table. It is further possible to extract with a network mask the address which depicts the network part and detect that way where the IP packet is supposed to be routed to. For IPv6 those principles can generally be applied as well, as it mainly distinguishes from IPv4 by the number of blocks and the length of each block.
As the IP packet is detected as being addressed for an internal endpoint 2.5, 2.6, 2.7, now the IP hub for internal communication 2.13a from the filtering unit 2.13 is used to forward the IP packet to the first IP servicing unit 2.14. Here the IP packet can be unwrapped according to the conversion method associated to the address internal endpoint 2.6 and the message contained in the IP packet is after unwrapping within the first IP servicing unit 2.14 handed over to the internal endpoint 2.6 which can process this message accordingly.

As each IP packet is also equipped with an originator address, in this case the IP address of the device appliance, it is for a response from the internal endpoint of the communication unit possible to return the response to the originator over the same way back. For this direction the first IP servicing unit 2.14 is conducting the wrapping of the IP packet, and the second IP servicing unit 2.12 is conducting the unwrapping of the IP packet and forwarding to the components of the device appliance.

FIG 3.b shows in comparison to FIG 3.a the situation when an IP packet is designated for an external endpoint which is reachable via wireless link 2.3.

In this case a component 2.15 of the device appliance 2.2 is responsible for communication to external endpoints. On side of the device appliance the steps are practically identical. Within the filtering unit 2.13 it is now detected that the destination address of the IP packet is designating an external endpoint. Therefore the IP hub for external communication 2.13b is handling the IP packet and prepares the sending to the external endpoint by means of wireless link 2.3. The steps for creating a context, transmitting packets etc. are well defined in the standard procedures of IP communication.

In the above detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. The above detailed description is, therefore, not to be taken in a limiting sense, and the scope of the present invention is defined only by the appended claims, appropriately interpreted, along with the full range of equivalents to which the claims are entitled.

## Claims

1. Method for interaction between a device appliance (2.2) and a communication unit (2.1), the communication unit (2.1) being configured to be operated within a wireless cellular communication network, comprising a multitude of external endpoints reachable through the wireless cellular communication network,
the communication unit (2.1) comprising at least one internal endpoint (2.5, 2.6, 2.7), the communication unit (2.1) being coupled to the device appliance (2.2) by connection means (2.11) providing one or more access channels allowing interaction between the device appliance (2.2) and the communication unit (2.1),
the method is **characterized by** the steps of, for the device appliance (2.2):
- requesting from said connection means (2.11) to setting up a dedicated packet based connection using one single access channel,
- marking a data packet with destination information,
and the steps of, for said connection means (2.11), setting up the dedicated packet based connection using one single access channel and, for the communication unit (2.1):
- retrieving said data packet by way of the set up dedicated packet based connection,
- filtering said data packet according to the destination information the data packet is marked with,
whereby said filtering step comprises the sub-steps of:
- looking up the destination information in an address resolution table (2.19) stored in the communication unit (2.1) and
- indicating that the data packet is dedicated for an internal endpoint (2.5, 2.6, 2.7) if the destination information match with an address in the address resolution table (2.19),
- if the looking up indicates that the data packet is dedicated for the at least one internal endpoint (2.5, 2.6, 2.7),
- converting the data packet in a message according to the at least one internal endpoint's message format,
- forwarding the message to the at least one internal endpoint (2.5, 2.6, 2.7), or
- if the looking up does not indicate that the data packet is dedicated for the at least one internal endpoint (2.5, 2.6, 2.7),
- forwarding the data packet to one of the multitude of external endpoints depicted by the destination information.

2. Method according to claim 1
said method being such that it further includes the steps of,
prior to the step of converting,
looking up an information element indicating a type of internal endpoint (2.5, 2.6, 2.7), the information element being stored in relationship to the address resolution table (2.19) in relation to the stored destination information related to the internal endpoint (2.5, 2.6, 2.7),
selecting conversion method based on message format deducted from said information element.

3. Method according to claim 1
**characterized in that**,
prior to the step of converting, it further includes the step of requesting information related to conversion method from internal endpoint (2.5, 2.6, 2.7).

4. Method according to claim 1, said method being such that it includes, after the step of filtering, the step of examining at least one data packet according to authentication information provided with the data packet and the step of
- allowing access to the addressed internal endpoint (2.5, 2.6, 2.7) only in case of compliance of the authentication information with the internal endpoints (2.5, 2.6, 2.7) access policy.

5. Method according to claim 1,
said method being such that it includes
- in conjunction with the step of setting up dedicated packet based connection, the step of exchanging security related items between communication unit (2.1) and device appliance (2.2), and
- the step of establishing a secured packet based communication by means of the exchanged security related items.

6. Method according claim 1,
said method being such that it further includes for the communication unit (2.1) the step of
providing on request an internal endpoint directory comprising information about accessible internal endpoints (2.5, 2.6, 2.7) accompanied by the related destination information.

7. Method according to claim 1
said method being such that it comprises
- within communication unit (2.1), the step of retrieving data packets from remote communication devices operating in the wireless cellular communication network,
- and the step forwarding data packets to at least one of the internal endpoints (2.5, 2.6, 2.7) is based on destination information comprising a subaddressing item of the communication unit address within the wireless cellular communication network.

8. Communication unit (2.1) for operating within a wireless cellular communication network,
the communication unit (2.1) is configured to be coupled to a device appliance (2.2), and is further comprising at least one internal endpoint (2.5, 2.6,2.7),
the wireless cellular communication network comprising a plurality of external endpoints,
**characterized in that** the communication unit (2.1) comprises a filtering unit (2.13) and an address resolution table (2.19) and the communication unit (2.1) has access to at least one conversion unit,
the filtering unit (2.13) is configured to
- receive from the device appliance (2.2) by way of a dedicated packet based connection a data packet marked with destination information,
- look up said destination information in the address resolution table (2.19),
- indicate that the data packet is dedicated for a single internal endpoint (2.5, 2.6, 2.7) if the destination information match with an address in the address resolution table (2.19),
if it is indicated that the data packet is dedicated for a single internal endpoint, a single conversion unit is configured to
- convert the data packet in a message according to the internal endpoint's message format,
- forward the message to the dedicated internal endpoint (2.5, 2.6, 2.7),
if it is indicated that the data packet is not dedicated for the at least one internal endpoint (2.5, 2.6, 2.7), the filtering unit (2.13) is configured to
- forward the data packet to one of the multitude of external endpoints depicted by the destination information.

9. Communication unit (2.1) according to claim 8,
wherein said conversion unit is configured to
- look up an information element indicating a type of internal endpoint (2.5, 2.6, 2.7), the information element being stored in the address resolution table (2.19) in relation to the stored destination information related to the internal endpoint (2.5, 2.6, 2.7),
- select conversion method based on internal endpoint's message format deducted from said information element.

10. Communication unit (2.1) according to claim 8,
wherein said conversion unit is configured to request information related to conversion method from the internal endpoint (2.5, 2.6, 2.7) as indicated in the destination information.

11. Communication unit (2.1) according to claim 8,
wherein the filtering unit (2.13) is further configured to:
- examine at least one data packet according to authentication information provided with the data packet,
- allow access to the addressed internal endpoint (2.5, 2.6, 2.7) only in case of compliance of the authentication information with the internal endpoints access policy.

12. Communication unit (2.1) according to claim 8,
configured to
- exchange security related items with device appliance (2.2), prior to setting up the dedicated packet based connection, and
- establish a secured packed based communication by means of the exchanged security related items.

13. Communication unit (2.1) according to claim 8,
configured to provide on request from the device appliance (2.2) an internal endpoint directory comprising information about accessible internal endpoints (2.5, 2.6, 2.7) accompanied by the related destination information.

14. Communication unit (2.1) according to claim 8,
configured to retrieve data packets from remote communication devices operating in the wireless cellular communication network, and to forward packets to at least one of the internal endpoints (2.5, 2.6, 2.7) based on destination information comprising a subaddressing item of the communication unit address within the wireless cellular communication network.

15. Device appliance (2.2) coupled with a communication unit (2.1), by means of connection means (2.11) providing one or more access channels allowing interaction between the device appliance (2.2) and the communication unit (2.1),
**characterized in that** the device appliance (2.2) comprises packet based connection means, said device appliance (2.2) being further configured to
- request from said connection means to set up a dedicated packet based connection using one single access channel,
- mark a data packet with destination information,
- submit the data packet by way of the dedicated packet based connection to the communication unit (2.1),
wherein the destination information depicts either an internal endpoint (2.5, 2.6, 2.7) of the communication unit or an external endpoint.
